# EUROPEAN PATENT APPLICATION

(11) **EP 4 538 055 A1**
(43) Date of publication of application: **16.04.2025**
(21) Application number: 24729171.9
(22) Date of filing: 27.02.2024
(51) Int. Cl.: B60C 7/00

(54) **INFLATION-FREE VACUUM TIRE**

(30) Priority: 15.08.2023 CN 202311026004; 29.01.2024 CN 202410119405
(71) Applicant: Zhongce Rubber Group Co., Ltd, Hangzhou, Zhejiang 310018 (CN)
(72) Inventor: LUO, Nailiang, Hangzhou Zhejiang 310018 (CN); WANG, Jirong, Hangzhou Zhejiang 310018 (CN); REN, Xuepeng, Hangzhou Zhejiang 310018 (CN); LIAO, Shuishu, Hangzhou Zhejiang 310018 (CN); LV, Yanping, Hangzhou Zhejiang 310018 (CN); WENG, Jie, Hangzhou Zhejiang 310018 (CN); FAN, Peilin, Hangzhou Zhejiang 310018 (CN); WU, Rongrong, Hangzhou Zhejiang 310018 (CN)
(74) Representative: JD&P Patent Attorneys Joanna Dargiewicz & Partners
(86) International application number: PCT/CN2024/078767
(87) International publication number: WO 2025/035729

(57) **Abstract**

The present disclosure relates to the technical field of tires, and in particular to a non-pneumatic vacuum tire. The non-pneumatic vacuum tire includes a tread layer, a carcass ply layer and a puncture-resistant airtight layer. The tread layer is provided on the carcass ply layer and located at a crown; a pattern groove is formed in a surface of the tread layer; the puncture-resistant airtight layer is fixedly provided between the tread layer and the carcass ply layer or fixedly provided under the carcass ply layer; the puncture-resistant airtight layer includes one or more layers of canvas; a warp and a weft of the canvas each are formed by a plurality of filaments; and the canvas forms the puncture-resistant airtight layer by rubber impregnation and rubber coating; the puncture-resistant airtight layer at least covers a clinch to a shoulder; and a lower end of the puncture-resistant airtight layer extends to the clinch and forms a turn-up structure. Through the puncture-resistant airtight layer composed of the rubber impregnated and coated canvas, the vacuum tire achieves better puncture resistance and airtightness.

## Description

### TECHNICAL FIELD

The present disclosure relates to the technical field of tires, and in particular to a non-pneumatic vacuum tire.

### BACKGROUND

With the improvement of living standards, people are imposing higher and higher requirements on qualities and load capacities of products.

At present, the vacuum tire has been applied to more tire fields. With a desirable application effect, the vacuum tire has become a high-end tire product. However, airtightness and puncture resistance are still problematic for the vacuum tire.

For example, the Chinese utility model patent No. CN 203623290 U announced on June 4, 2014 provides a vacuum tire. According to the solution, a puncture-resistant fiber layer is only described briefly from an external mounting structure. There are neither descriptions on a specific structure of the vacuum tire, nor disclosures on an inspiration of the relevant airtight design.

### SUMMARY OF PRESENT INVENTION

An objective of the present disclosure is to provide a non-pneumatic vacuum tire, to solve the above technical problem. Through a puncture-resistant airtight layer composed of rubber impregnated and coated canvas, the vacuum tire achieves better puncture resistance and airtightness.

In order to achieve the above objective, the present disclosure adopts the following technical solutions:

A non-pneumatic vacuum tire includes a tread layer, a carcass ply layer and a puncture-resistant airtight layer; the tread layer is provided on the carcass ply layer and located at a crown; a pattern groove is formed in a surface of the tread layer; the puncture-resistant airtight layer is fixedly provided between the tread layer and the carcass ply layer or fixedly provided under the carcass ply layer; the puncture-resistant airtight layer includes one or more layers of canvas; a warp and a weft of the canvas each are formed by 5-30 filaments; and the canvas forms the puncture-resistant airtight layer by rubber impregnation and rubber coating; and the puncture-resistant airtight layer at least covers a clinch to a shoulder; and a lower end of the puncture-resistant airtight layer extends to the clinch and forms a turn-up structure.

Preferably, the warp is a flat fiber bundle, and the weft is a quasi-circular fiber bundle; alternatively, the warp is the quasi-circular fiber bundle, and the weft is the flat fiber bundle; alternatively, both the warp and the weft are the flat fiber bundle; and alternatively, both the warp and the weft are the quasi-circular fiber bundle; and the flat fiber bundle is tiled by 5-30 filaments; and the quasi-circular fiber bundle is formed by 5-30 filaments and has a quasi-circular normal section.

Preferably, a width of the flat fiber bundle is 0.5-3.5 mm, and preferably 1.5-3.0 mm; and a width of the quasi-circular fiber bundle is 0.2-1.0 mm, and preferably 0.5-0.8 mm.

Preferably, a width of a visible light gap of the canvas is 0-2 mm, and preferably 0.2-1.5 mm.

Preferably, the quasi-circular fiber bundle is twisted.

Preferably, there are two puncture-resistant airtight layers that are symmetrically provided between the tread layer and the carcass ply layer; and one of the two puncture-resistant airtight layers includes an upper end extending to the shoulder or a position under the tread layer, and a lower end extending to the clinch and bypassing the clinch to form the turn-up structure inwardly.

Preferably, the puncture-resistant airtight layer is provided under the carcass ply layer; and two ends of the puncture-resistant airtight layer respectively extend to two clinches, and bypass the clinches to form the turn-up structure inwardly.

Preferably, the puncture-resistant airtight layer is provided under the carcass ply layer; two ends of the puncture-resistant airtight layer respectively extend to two clinches, and bypass the clinches to form the turn-up structure outwardly; and a turn-up endpoint is located at a position above the clinch and between the shoulder and the carcass ply layer.

Preferably, the puncture-resistant airtight layer is provided under the carcass ply layer; two ends of the puncture-resistant airtight layer respectively extend to two clinches, and bypass the clinches to form the turn-up structure outwardly; and a turn-up endpoint is located between the shoulder or the crown and the carcass ply layer.

Preferably, the carcass ply layer is located at an inner side of the non-pneumatic vacuum tire, and two ends of the carcass ply layer respectively bypass two clinches to turn up outwardly, and extend to a position under the tread layer to intersect with each other and laminate together.

To sum up, the present disclosure has the following advantages:

The present disclosure can better reinforce airtightness of the vacuum tire by providing the puncture-resistant airtight layer between the tread layer and the carcass ply layer or under the carcass ply layer. Meanwhile, the puncture-resistant airtight layer is formed by one or more layers of rubber impregnated canvas, and the rubber impregnated canvas can better guarantee puncture resistance of the puncture-resistant airtight layer.

### BRIEF DESCRIPTION OF THE DRAWINGS

FIG. 1 schematically illustrates a vacuum tire in which a puncture-resistant airtight layer is attached between a tread layer and a carcass ply layer;
FIG. 2 schematically illustrates a vacuum tire in which a puncture-resistant airtight layer is attached between a tread layer and a carcass ply layer, and from a clinch to another clinch;
FIG. 3 schematically illustrates a vacuum tire in which a puncture-resistant airtight layer is attached to a lower surface of a carcass ply layer;
FIG. 4 schematically illustrates a vacuum tire in which a puncture-resistant airtight layer is attached to a lower surface of a carcass ply layer, with an end from a clinch to a shoulder;
FIG. 5 schematically illustrates a canvas in which a warp and a weft are different fiber bundles;
FIG. 6 schematically illustrates a canvas in which both a warp and a weft are a flat fiber bundle;
FIG. 7 schematically illustrates a multifilament fabric;
FIG. 8 illustrates an airtightness curve of 40-622P-020TR; and
FIG. 9 illustrates an online peeling test result.

In the figures: 1: tread layer, 2: carcass ply layer, 3: puncture-resistant airtight layer, 11: pattern groove, and 31: canvas.

### DETAILED DESCRIPTION OF THE EMBODIMENTS

The technical solutions in the embodiments of the present disclosure are clearly and completely described below with reference to the drawings in the embodiments of the present disclosure. Apparently, the described embodiments are only some rather than all of the embodiments of the present disclosure. All other embodiments obtained by a person of ordinary skill in the art based on the embodiments of the present disclosure without creative efforts shall fall within the protection scope of the present disclosure.

In the description of the present disclosure, it needs to be understood the orientation or positional relationships indicated by terms, such as "up", "down", "front", "rear", "left", "right", "vertical", "horizontal", "top", "bottom", "inside", and "outside", are based on the orientation or positional relationship shown in the accompanying drawings, are merely for facilitating the description of the present disclosure and simplifying the description, rather than indicating or implying that an apparatus or element referred to must have a particular orientation or be constructed and operated in a particular orientation, and therefore shall not be interpreted as limiting the present disclosure.

It should be noted that similar reference signs and letters represent similar items in the accompanying drawings below. Therefore, once an item is defined in one accompanying drawing, it does not need to be further defined and described in subsequent accompanying drawings.

The specific implementations of the present disclosure are described in detail below with reference to the drawings.

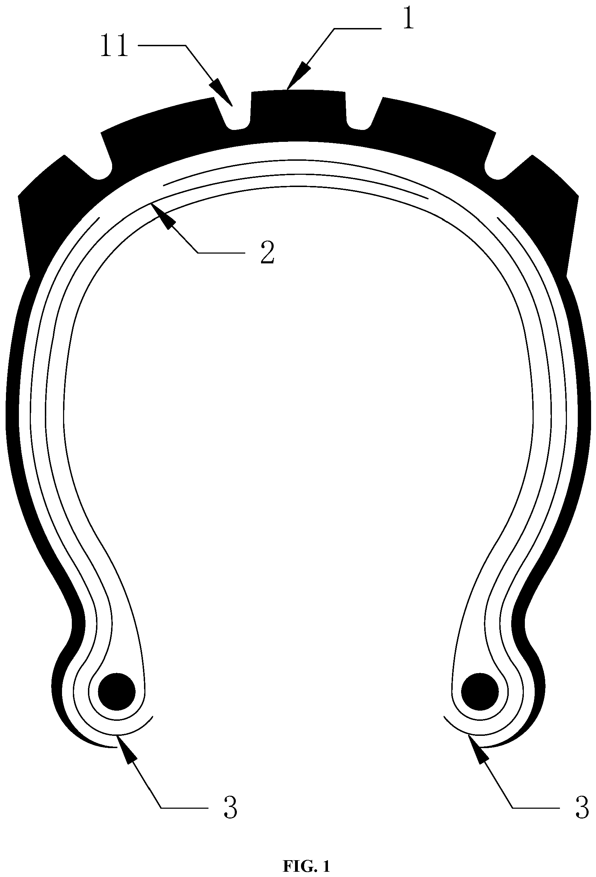

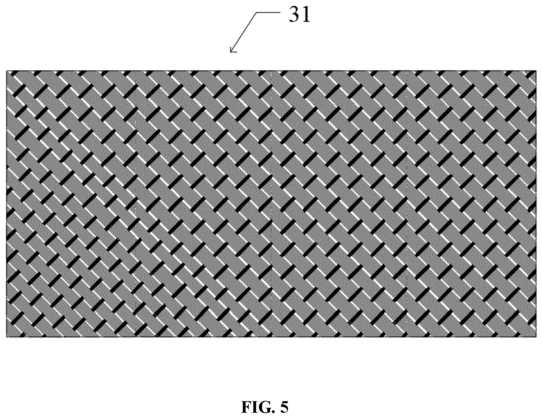

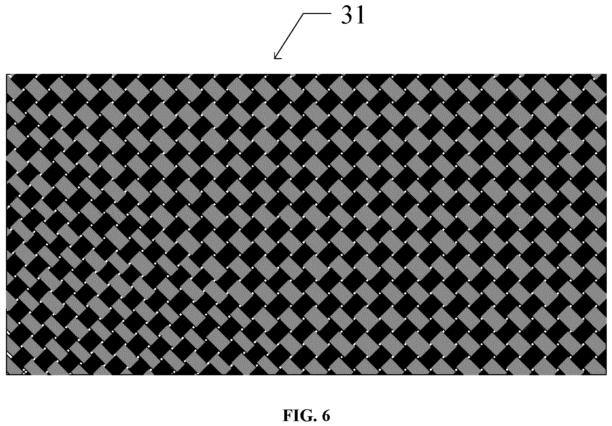

As shown in FIG. 1 to FIG. 6, a non-pneumatic vacuum tire is provided with a crown, a shoulder, a structure from a clinch to the shoulder, and the clinch. The non-pneumatic vacuum tire includes a tread layer 1 and a carcass ply layer 2. The tread layer 1 is provided on the carcass ply layer 2 and located at the crown. A plurality of pattern grooves 11 for increasing a frictional force and improving drainage performance are formed in a surface of the tread layer 1.

As shown in FIG. 1 to FIG. 6, the non-pneumatic vacuum tire further includes a puncture-resistant airtight layer 3. The puncture-resistant airtight layer 3 is fixedly provided between the tread layer 1 and the carcass ply layer 2 or fixedly provided under the carcass ply layer 2. The puncture-resistant airtight layer 3 includes one or more layers of canvas 31. A warp and a weft of the canvas 31 each are formed by a plurality of filaments. The canvas 31 forms the puncture-resistant airtight layer 3 by rubber impregnation and rubber coating. The puncture-resistant airtight layer 3 at least covers the clinch to the shoulder. A lower end of the puncture-resistant airtight layer 3 extends to the clinch and forms a turn-up structure, and the specific structure is described below.

After the warp and the weft are combined into the canvas 31, the canvas 31 is impregnated with rubber to achieve better airtightness. The rubber impregnated canvas is vulcanized, such that the canvas can be combined with the tread layer 1 and the carcass ply layer 2 together to form the vacuum tire.

The warp is a flat fiber bundle, and the weft is a quasi-circular fiber bundle. Alternatively, both the warp and the weft are the flat fiber bundle. Alternatively, both the warp and the weft are the quasi-circular fiber bundle. The flat fiber bundle is tiled by 5-30 filaments. The quasi-circular fiber bundle is formed by 5-30 filaments and has a quasi-circular normal section.

When the warp and the weft are the quasi-circular fiber bundle, the quasi-circular fiber bundle is twisted. The twisted warp and weft have a more compact structure and cannot be dispersed, thereby ensuring structural stability.

A width of the flat fiber bundle is 0.5-3.5 mm. A width of the quasi-circular fiber bundle is 0.2-1.0 mm.

A width of a visible light gap of the canvas 31 is 0-2 mm. This can ensure desirable airtightness of the puncture-resistant airtight layer 3.

As shown by FIG. 1 to FIG. 4, the puncture-resistant airtight layer 3 formed by the canvas 31 can be fixedly provided between the tread layer 1 and the carcass ply layer 2 or fixedly provided under the carcass ply layer 2.

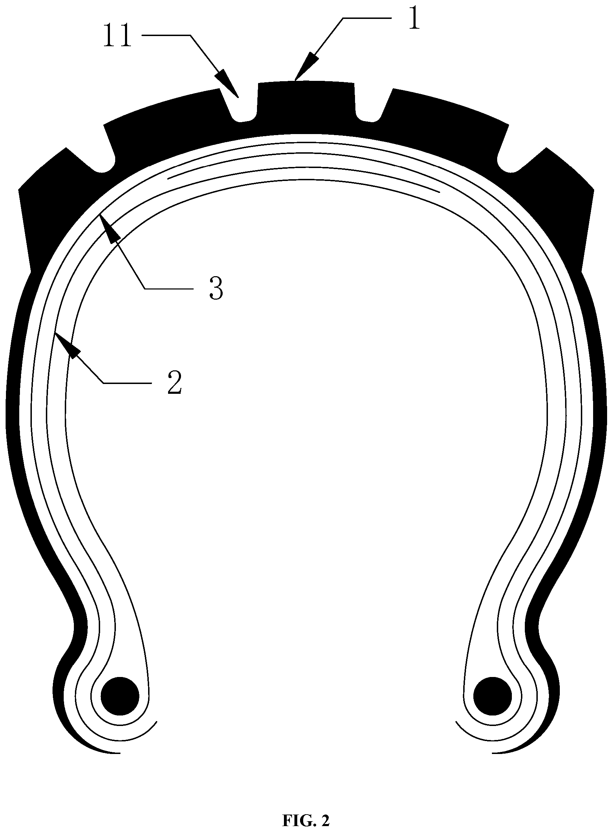

When the puncture-resistant airtight layer 3 is provided between the tread layer 1 and the carcass ply layer 2, there are the following two cases for the puncture-resistant airtight layer 3.
1. As shown by FIG. 1, there are two puncture-resistant airtight layers 3 that are symmetrically provided between the tread layer 1 and the carcass ply layer 2. One of the two puncture-resistant airtight layers 3 includes an upper end extending to the shoulder or a position under the tread layer 1, and a lower end extending to the clinch and bypassing the clinch to form the turn-up structure inwardly.
2. As shown by FIG. 2, the puncture-resistant airtight layer 3 is provided under the carcass ply layer 2. Two ends of the puncture-resistant airtight layer 3 respectively extend to two clinches, and bypass the clinches to form the turn-up structure inwardly.

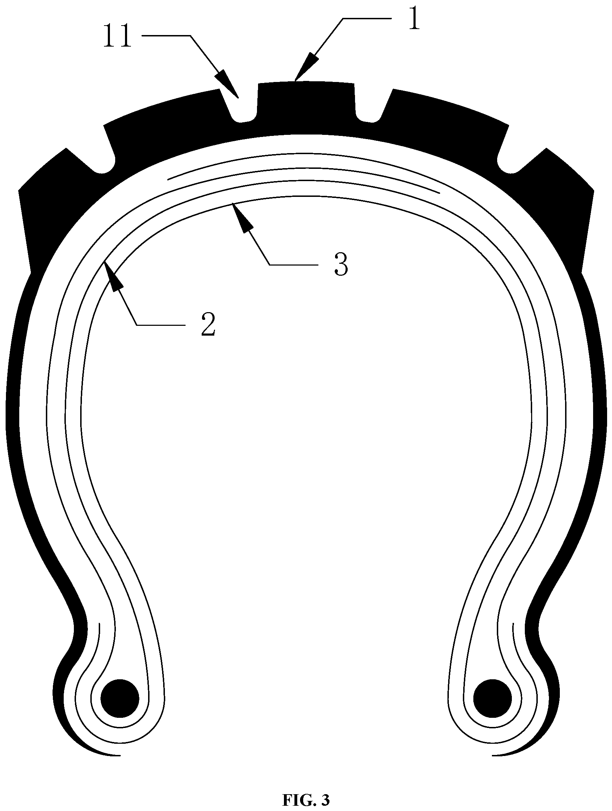

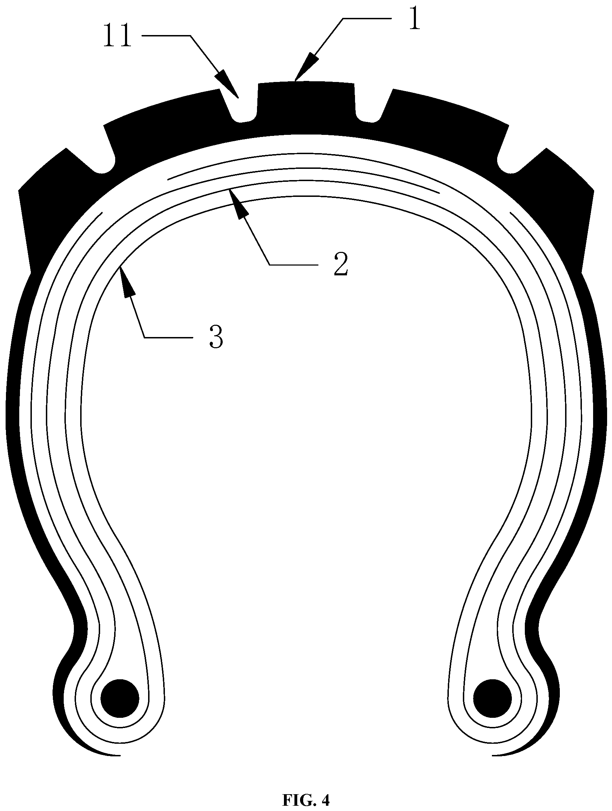

When the puncture-resistant airtight layer 3 is provided under the carcass ply layer 2, there are the following two cases for the puncture-resistant airtight layer 3.
1. As shown by FIG. 3, the puncture-resistant airtight layer 3 is provided under the carcass ply layer 2. Two ends of the puncture-resistant airtight layer 3 respectively extend to two clinches, and bypass the clinches to form the turn-up structure outwardly. A turn-up endpoint is located at a position above the clinch and between the shoulder and the carcass ply layer 2.
2. As shown by FIG. 4, the puncture-resistant airtight layer 3 is provided under the carcass ply layer 2. Two ends of the puncture-resistant airtight layer 3 respectively extend to two clinches, and bypass the clinches to form the turn-up structure outwardly. A turn-up endpoint is located between the shoulder or the crown and the carcass ply layer 2.

According to the above four packaging solutions, when the end of the puncture-resistant airtight layer 3 is located at the clinch, the end of the puncture-resistant airtight layer 3 may be clamped between the tread layer 1 and the carcass ply layer 2, and may also be attached to an inner side of the end of the carcass ply layer 2, provided that the end of the puncture-resistant airtight layer 3 falls within the range of the clinch. This can ensure the overall strength of the tire.

The carcass ply layer 2 may also be located at an inner side of the non-pneumatic vacuum tire. Two ends of the carcass ply layer 2 respectively bypass two clinches to turn up outwardly, and extend to a position under the tread layer 1 to intersect with each other and laminate together.

To sum up, the present disclosure has the following advantages:

The present disclosure can better reinforce airtightness of the vacuum tire by providing the puncture-resistant airtight layer 3 between the tread layer 1 and the carcass ply layer 2 or under the carcass ply layer 2. Meanwhile, the puncture-resistant airtight layer 3 is formed by one or more layers of rubber impregnated canvas 31, and the rubber impregnated canvas can better guarantee puncture resistance of the puncture-resistant airtight layer 3.

### 1. Airtightness test:

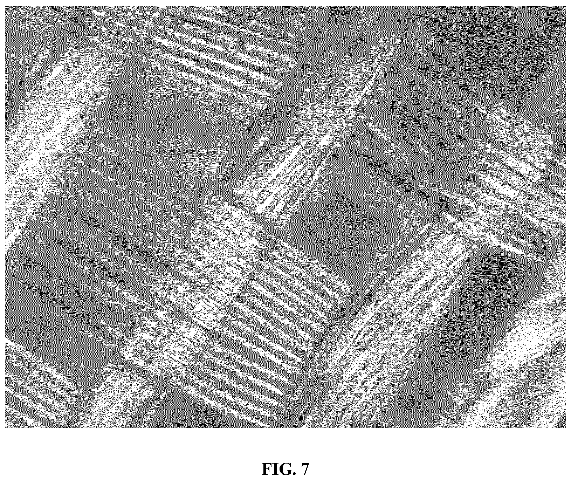

The tire structure shown by FIG. 1 is used in the test. The puncture-resistant airtight layer 3 is prepared from the canvas of FIG. 7 by rubber coating, and has a thickness of 0.8 mm. As shown by FIG. 7, the weft of the canvas uses a flat fiber bundle formed by 15 nylon-6 filaments side by side, while the warp uses a quasi-circular fiber bundle formed by 15 nylon-6 filaments. In the comparative example, the puncture-resistant airtight layer is prepared from common canvas by rubber coating, and has a thickness of 0.6 mm. The weft in the common canvas uses a same fineness and a same monofilament.

Static test: (equivalent leak-proof solutions are added); rim: 622X23 tubeless crochet (TC); room temperature: 20±3°C; maximum pressure: 450 kPa; and test time: 72 h.

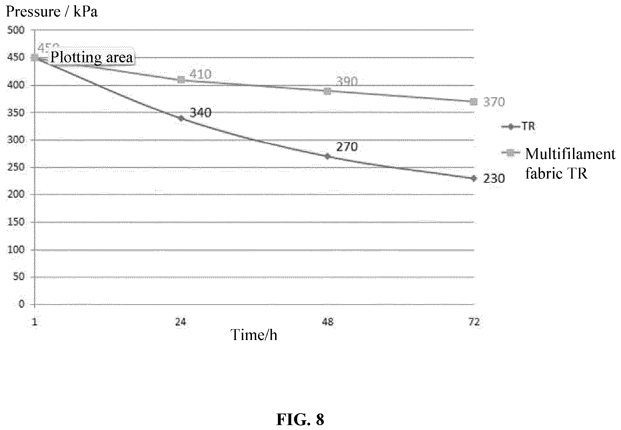

When the puncture-resistant airtight layer 3 is provided between the tread layer 1 and the carcass ply layer 2, specific comparison data is as shown in FIG. 8. The multifilament fabric TR represents the canvas 31 in the present disclosure, while the TR represents the common canvas in the comparative example. In comparison, the canvas 31 in the present disclosure has better airtightness.

| **Table 1 Airtightness test** | | | | | | |
|---|---|---|---|---|---|---|
| **Airtightness 160°*15 min** | | | | **Airtightness 136°*50 min** | | |
| | Sample thickness | Permeability | Permeability coefficient | Sample thickness | Permeability | Permeability coefficient |
| 420D monofilament | 1.15mm | 1.99E-03 | 2.64E-13 | 1.113mm | 1.82E-03 | 2.34E-13 |
| 420D multifilament | 1.13mm | 1.68E-03 | 2.20E-13 | 1.06mm | 1.45E-03 | 1.78E-13 |

The 420D multifilament fabric is the canvas 31 in the present disclosure, while the 420D monofilament is the common canvas in the comparative example. In comparison, under a same thickness, the 420D multifilament has better airtightness. Under 136°C vulcanization conditions, the airtightness is better, and is the same as that of the natural rubber (NR) inner tube with the same thickness. Possibly, the 420D multifilament is thinner, and in test with the same thickness, the higher the rubber content, the better the airtightness.

### 2. Calendering test

The tire structure shown by FIG. 1 is used in the test. The puncture-resistant airtight layer 3 is prepared from the canvas of FIG. 7 by rubber coating, and has a thickness of 0.8 mm. As shown by FIG. 7, the weft of the canvas uses a flat fiber bundle formed by 15 nylon-6 filaments side by side, while the warp uses a quasi-circular fiber bundle formed by 15 nylon-6 filaments. In the comparative example, the puncture-resistant airtight layer is prepared from common canvas by rubber coating, and has a thickness of 0.6 mm. The weft in the common canvas uses a same fineness and a same monofilament.

Data of the calendering test is as shown by Table 2.

| **Table 2 Calendering test** | | |
|---|---|---|
| | Maximum peeling force KN | Peeling strength KN/m |
| 1-1 monofilament | 0.203 | 7.137 |
| 1-2 | 0.192 | 7.067 |
| 1-3 | 0.201 | 6.805 |
| Mean value | 0.199 | 7.003 |
| 2-1 multifilament | 0.218 | 7.973 |
| FIG. 2-2 | 0.231 | 8.089 |
| 2-3 | 0.215 | 7.996 |
| Mean value | 0.221 | 8.019 |

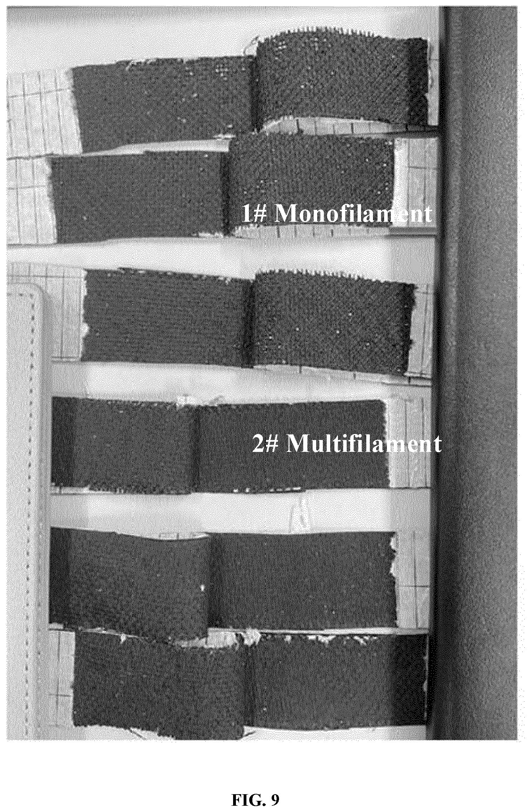

The 2-1 multifilament is the canvas 31 in the present disclosure, while the 1-1 monofilament is the common canvas in the comparative example. In comparison, the canvas 31 in the present disclosure has better adhesiveness and a rubber coating rate of 90% or more. The online peeling test result is as shown in FIG. 9.

The above are descriptions on the embodiments of the present disclosure. The above descriptions of the disclosed embodiments can enable a person skilled in the art to implement or practice the present disclosure. Various modifications to these embodiments are apparent to the person skilled in the art. The general principles defined herein can be implemented in other embodiments, without departing from the spirit or scope of the present disclosure. Accordingly, the present disclosure will not be limited to these embodiments shown herein, but fall within the widest scope consistent with the principles and novel features disclosed herein.

## Claims

1. A non-pneumatic vacuum tire, comprising a tread layer (1) and a carcass ply layer (2), the tread layer (1) being provided on the carcass ply layer (2) and located at a crown, and a pattern groove (11) being formed in a surface of the tread layer (1), wherein,
the non-pneumatic vacuum tire further comprises a puncture-resistant airtight layer (3); the puncture-resistant airtight layer (3) is fixedly provided between the tread layer (1) and the carcass ply layer (2) or fixedly provided under the carcass ply layer (2); the puncture-resistant airtight layer (3) comprises one or more layers of canvas (31); a warp and a weft of the canvas (31) each are formed by 5-30 filaments; and the canvas (31) forms the puncture-resistant airtight layer (3) by rubber impregnation and rubber coating; and
the puncture-resistant airtight layer (3) at least covers a clinch to a shoulder; and a lower end of the puncture-resistant airtight layer (3) extends to the clinch and forms a turn-up structure.

2. The non-pneumatic vacuum tire according to claim 1, wherein the warp is a flat fiber bundle, and the weft is a quasi-circular fiber bundle; alternatively, the warp is the quasi-circular fiber bundle, and the weft is the flat fiber bundle; alternatively, both the warp and the weft are the flat fiber bundle; and alternatively, both the warp and the weft are the quasi-circular fiber bundle; and
the flat fiber bundle is tiled by 5-30 filaments; and the quasi-circular fiber bundle is formed by 5-30 filaments and has a quasi-circular normal section.

3. The non-pneumatic vacuum tire according to claim 2, wherein a width of the flat fiber bundle is 0.5-3.5 mm, and preferably 1.5-3.0 mm; and a width of the quasi-circular fiber bundle is 0.2-1.0 mm, and preferably 0.5-0.8 mm.

4. The non-pneumatic vacuum tire according to claim 2, wherein a width of a visible light gap of the canvas is 0-2 mm, and preferably 0.2-1.5 mm.

5. The non-pneumatic vacuum tire according to claim 2, wherein the quasi-circular fiber bundle is twisted.

6. The non-pneumatic vacuum tire according to claim 1, wherein there are two puncture-resistant airtight layers (3) that are symmetrically provided between the tread layer (1) and the carcass ply layer (2); and one of the two puncture-resistant airtight layers (3) comprises an upper end extending to the shoulder or a position under the tread layer (1), and a lower end extending to the clinch and bypassing the clinch to form the turn-up structure inwardly.

7. The non-pneumatic vacuum tire according to claim 1, wherein the puncture-resistant airtight layer (3) is provided under the carcass ply layer (2); and two ends of the puncture-resistant airtight layer (3) respectively extend to two clinches, and bypass the clinches to form the turn-up structure inwardly.

8. The non-pneumatic vacuum tire according to claim 1, wherein the puncture-resistant airtight layer (3) is provided under the carcass ply layer (2); two ends of the puncture-resistant airtight layer (3) respectively extend to two clinches, and bypass the clinches to form the turn-up structure outwardly; and a turn-up endpoint is located at a position above the clinch and between the shoulder and the carcass ply layer (2).

9. The non-pneumatic vacuum tire according to claim 1, wherein the puncture-resistant airtight layer (3) is provided under the carcass ply layer (2); two ends of the puncture-resistant airtight layer (3) respectively extend to two clinches, and bypass the clinches to form the turn-up structure outwardly; and a turn-up endpoint is located between the shoulder and the carcass ply layer (2) or between the crown and the carcass ply layer (2).

10. The non-pneumatic vacuum tire according to claim 1, wherein the carcass ply layer (2) is located at an inner side of the non-pneumatic vacuum tire, and two ends of the carcass ply layer (2) respectively bypass two clinches to turn up outwardly, and extend to a position under the tread layer (1) to intersect with each other and laminate together.
